# EUROPÄISCHE PATENTSCHRIFT

(11) **EP 1 716 915 B1**
(45) Veröffentlichungstag und Bekanntmachung des Hinweises auf die Patenterteilung: **29.10.2008**
(21) Anmeldenummer: 06008610.5
(22) Anmeldetag: 26.04.2006
(51) Int. Cl.: B01F 3/04, B01F 11/00

(54) **Verfahren und Vorrichtung zum Aufschäumen wenigstens eines flüssigen oder viskosen Stoffes**
Method and device for foaming at least a fluid or a viscous product
Procédé et appareil pour faire mousser au moins un liquide ou un produit visqueux

(30) Priorität: 30.04.2005 DE 102005020263
(43) Veröffentlichungstag der Anmeldung: 02.11.2006
(73) Patentinhaber: beba Mischtechnik GmbH, 49632 Essen/Oldenburg (DE)
(72) Erfinder: Witte,Ulrich, Dipl.-Ing., 49632 Essen/Oldenburg (DE)
(74) Vertreter: Jabbusch, Matthias

(56) Entgegenhaltungen:
- FR-A- 2 857 574
- US-A- 3 735 961
- US-A1- 2004 186 425
- US-B1- 6 484 568

## Beschreibung

Die Erfindung bezieht sich auf ein Verfahren zum Aufschäumen wenigstens eines flüssigen oder viskosen Stoffes, bei dem der Stoff in zumindest eine geschlossene Kammer eingebracht wird. Des weiteren betrifft die Erfindung eine Vorrichtung zum Aufschäumen wenigstens eines flüssigen oder viskosen Stoffes mit einer Mischeinrichtung, welche wenigstens eine geschlossene Kammer für den aufzuschäumenden Stoff aufweist.

Verfahren und Vorrichtungen bekannter Ausführungen, insbesondere zur industriellen Herstellung aufgeschäumter Stoffe, arbeiten unter der Verwendung eines Rührwerkes. Dazu wird der flüssige oder viskose Stoff bzw. das Gemisch in einen Behälter eingebracht und anschließend mit Hilfe eines Rührwerkes aufgeschäumt. Dazu ragt insbesondere wenigstens ein Rührwerkzeug in den mit dem aufzuschäumenden Stoff versehenen Behälter. Während des Aufschäumvorganges wird der flüssige bzw. viskose Stoff bevorzugt an zwei entgegensetzt rotierenden Rührwerkzeugen vorbeigeführt. Nachdem der Schaum seine gewünschte Festigkeit erreicht hat, wird er aus dem Behälter abgeführt und dieser für einen neuen Aufschäumvorgang mit dem flüssigen oder viskosen Stoff bzw. Stoffgemisch befüllt.

Aus der US-B1-6484568 sind ein Verfahren und eine Vorrichtung zu Aufschäumen einer Flüssigkeit und dem anschließenden Testen der aufgeschäumten Flüssigkeit bekannt. Die Vorrichtung umfaßt ein zylindrisches Druckgefäß, in dem die aufzuschäumende Flüssigkeit aufgenommen ist. Des weiteren ist innerhalb des Druckgefäßes eine beweglich gehaltene zylindrische Aufschäumscheibe angeordnet, welche mit einer Vielzahl von Durchbrüchen versehen ist. Die Vorrichtung umfaßt zudem einen Motor, dessen Motorwelle mit dem Druckgefäß gekoppelt ist. Bei Inbetriebnahme des Motors wird das Druckgefäß in eine gleichmäßige Drehbewegung um eine senkrecht zur Längsachse des Druckgefäßes verlaufende Drehachse versetzt. Durch die Drehbewegung des Druckgefäßes wird die Aufschäumscheibe von einem Ende zum anderen Ende des Druckgefäßes bewegt, wodurch die Flüssigkeit aufgeschäumt wird.

Weiterhin ist aus der US-A-4000086 ein Verfahren und eine Vorrichtung zum Emulgieren von Öl bekannt. Zum Vermischen des Öls mit Wasser werden die Bestandteile an einem Ende eines zylindrischen Druckgefäßes jeweils über separate Einlässe eingegeben und das in seiner Längsrichtung beweglich aufgenommene Druckgefäß über eine an einem Ende des Druckgefäßes angeordnete, rotierende Unwucht in Richtung seiner Längs- bzw. Mittenachse in eine oszillierende Linearbewegung versetzt. In vorbestimmten Abständen sind innerhalb des Druckgefäßes senkrecht zur Wandung des Druckgefäßes Gitter oder Siebe angeordnet, welche mittels der oszillierenden Linearbewegung durch das Öl-Wasser-Gemisch bewegt werden und eine homogene Durchmischung bewirken sollen. Durch das kontinuierliche Nachführen von Wasser und Öl wird am gegenüberliegenden Ende des Druckgefäßes die fertige Emulsion kontinuierlich abgeführt.

Bei Verfahren der eingangs genannten Gattung, insbesondere unter Einsatz eines Rührwerkes ist es beim Aufschäumen von Stoffen, die in der Lebensmittelindustrie verwendet werden, unerläßlich, daß der Behälter während des Aufschäumprozesses stetig gekühlt wird. Dies ist insbesondere beim Aufschäumen von Sahne notwendig, da diese sonst vorzeitig dem Zersetzungsprozeß unterliegen würde. Des weiteren besteht bei der dazu eingesetzten Vorrichtung das Problem, daß die drehbar gelagerten Wellen des Rührwerkes, insbesondere bei Aufschäumvorgängen in der Lebensmittelindustrie, mit einer speziellen Dichtung versehen werden müssen. Dadurch soll eine mögliche Verschmutzung des zu schäumenden Stoffes ausgeschlossen werden. Die Dichtungen sind in regelmäßigen Zeitabständen auszuwechseln, damit ein gesicherter Herstellungsprozeß gewährleistet ist. Das bedeutet zum einen eine hohe Wartungsintensität, und es entstehen damit verbundene Kosten, und zum anderen sinkt durch die regelmäßig durchzuführenden Wartungsintervalle die Auslastung der Maschine und somit ihre Effektivität.

Bei bekannten Verfahren und Vorrichtungen, welche beispielsweise eine mit dem aufzuschäumenden Stoff gefüllte Druckkammer aufweisen, kann es durch den sich in der Kammer allmählich verfestigenden Stoff dazu kommen, daß die sich ausschließlich aufgrund ihres Eigengewichtes durch den Stoff bewegende Aufschäumscheibe während der fortlaufenden Drehungen nur noch über einen sich stetig verkleinernden Abschnitt innerhalb der Druckkammer bewegt. Je nach Verfestigungsgrad des aufgeschäumten Stoffes kann deren Bewegung gegebenenfalls zum Erliegen kommen. Dadurch entsteht in der Druckkammer ein aufgeschäumter Stoff mit ungleichmäßig verfestigten Stoffanteilen.

Der Erfindung liegt die Aufgabe zugrunde, ein Verfahren und eine Vorrichtung zur Durchführung des Verfahrens aufzuzeigen, mittels denen das Aufschäumen des Stoffes stets auf vorteilhaft einfache Weise möglich ist.

Die Lösung dieser Aufgabe erfolgt erfindungsgemäß durch ein Verfahren mit den Merkmalen des Patentanspruches 1 und durch eine Vorrichtung mit den Merkmalen des Patentanspruches 5. Vorteilhafte Weiterbildungen und Ausgestaltungen der Erfindung sind in den jeweils auf diese Patentansprüche rückbezogenen Unteransprüche angegeben.

Bei einem Verfahren zum Aufschäumen wenigstens eines flüssigen oder viskosen Stoffes, bei dem der Stoff in zumindest eine geschlossene Kammer eingebracht wird, während die Kammer in eine oszillierende Bewegung versetzt wird, ist nach der Erfindung vorgesehen, daß die Kammer während des Einbringens des Stoffes um ihre Mittenachse in eine oszillierende Rotationsbewegung versetzt wird, und daß über die oszillierende Rotationsbewegung mehrere in der Kammer feststehende, radial zur Mittenachse der Kammer ausgerichtete Aufschäumelemente durch den aufzuschäumenden Stoff bewegt werden. Durch das Einbringen des aufzuschäumenden Stoffes in eine geschlossene Kammer ist es möglich, das erfindungsgemäße Verfahren als kontinuierlichen Prozeß umzusetzen, da die Kammer der Mischeinrichtung bereits während des Einbringens des Stoffes in oszillierende Rotation in eine oszillierende Bewegung versetzt werden kann. Die Oszillation der geschlossenen Kammer mit ihrem darin feststehenden, radial zur Mittenachse der Kammer ausgerichteten Aufschäumelementen hat gegenüber dem Einbringen rotierender Rührwerkzeuge in einen Behälter zum Aufschäumen des Stoffes den Vorteil, daß die mechanische Beanspruchung beim Aufschäumprozeß des zu schäumenden Stoffes geringer ausfällt. Eine Kühlung des aufzuschäumenden Stoffes ist nicht notwendig und der Einsatz des erfindungsgemäßen Verfahrens speziell in der Lebensmittelindustrie beim Aufschäumen leicht verderblicher Waren läßt sich sehr einfach umzusetzen. Somit ist ein Herstellungsverfahren aufgezeigt, bei dem ohne eine zusätzliche Kühlung und ohne die dadurch entstehenden Qualitätsverluste aufgeschäumt werden kann.

Durch das Versetzen der Kammer in eine oszillierende Rotationsbewegung nach Einfüllen eines Stoffes in die Kammer wird der Stoff aufgeschäumt. Dafür ist es vorteilhaft nicht erforderlich, ein Rührwerkzeug in die Kammer vorragen zu lassen. Die geschlossene Kammer selbst bildet aufgrund ihrer oszillierenden Bewegung ein Aufschäumwerkzeug aus, auf rotierende oder sich in anderer Weise bewegende Bauteile im Inneren der Kammer kann mit dem Vorteil der konstruktiven Vereinfachung verzichtet werden.

Durch eine oszillierende Rotationsbewegung der Kammer erfahren die Kammer und gleichermaßen der zu schäumende Stoff um die Mittenachse der Kammer eine Rotationsbewegung, wobei diese Rotationsbewegung nur über einen vorbestimmten Abschnitt des Kammerumfanges bzw. über eine vorbestimmte Gradzahl ausgeführt wird. Ab einer bestimmten Anzahl der oszillierenden Bewegungen pro Zeiteinheit ist die Massenträgheit des aufzuschäumenden Stoffes größer als die Reibkräfte zwischen der Kammeroberfläche und dem zu verschäumenden Stoff, wodurch sich eine Relativ-bewegung zwischen dem eingebrachten Stoff und der Oberfläche der Kammer ergibt.

Dabei wird nach einer Weiterbildung der Erfindung mittels der Aufschäumelemente insbesondere ein Gas unter Anwendung hoher Scherkräfte in den flüssigen oder viskosen Stoff eingebracht. Dabei sollen durch die Aufschäumelemente Gasblasen erzeugt werden, die jeweils durch einen Flüssigkeitsfilm voneinander getrennt sind. Die Stabilität des Schaumes hängt dabei von der Größe der eingebrachten Gasblasen in den flüssigen Stoff ab, wobei kleinere Gasblasen eine größere Stabilität des Schaumes bedeuten.

Um einen kontinuierlichen Verfahrensablauf zu ermöglichen, wird der zu schäumende Stoff mit einem vorbestimmten Überdruck zwischen 1 bar bis 10 bar in die Kammer gedrückt. Über den Druck, welcher an dem in die Kammer einzubringenden Stoff anliegt, wird die Kontinuität des erfindungsgemäßen Verfahrens umgesetzt. Somit ist es nicht mehr notwendig, den Schaum nach dem Herstellungsprozeß in einem eigenständigen Verfahrensschritt aus dem Behälter zu entfernen. Mit Hilfe des anliegenden Druckes wird der flüssige oder viskose Stoff in die Kammer der Mischeinrichtung befördert, dort mit Hilfe der Aufschäumelemente verschäumt und der entstandene Schaum gleichzeitig durch den eingeführten, noch flüssigen Stoff aus der Kammer abgeführt. Nach dem Abführen des Schaumes aus der Kammer erfährt dieser noch eine zusätzliche Volumenvergrößerung, da die unter Druck in den aufzuschäumenden Stoff eingebrachten Gasblasen sich unter Umgebungsbedingungen stark ausdehnen. Weiterhin wird über den anliegenden Druck in Abhängigkeit der Viskosität des aufzuschäumenden Stoffes die Fließgeschwindigkeit desselbigen bestimmt.

Nach einer Weiterbildung der Erfindung ist vorgesehen, daß die oszillierende Bewegung der Kammer mit einer Frequenz von 10 Hz bis 25 Hz durchgeführt wird. Durch die Variabilität des vorbestimmten Frequenzbandes, mit der die Kammer bewegt wird, ist eine optimale Einstellmöglichkeit auf die unterschiedliche Viskosität der aufzuschäumenden Stoffe bzw. Stoffgemische gegeben und sorgt somit ständig für die gewünschte Zusammensetzung und Stabilität des Schaumes.

Bei einer Vorrichtung zum Aufschäumen wenigstens eines flüssigen oder viskosen Stoffes, mit einer Mischeinrichtung, welche wenigstens eine geschlossene Kammer für den aufzuschäumenden Stoff aufweist, vorzugsweise zum Durchführen des vorbeschriebenen Verfahrens, für die selbständiger Schutz beantragt wird, ist vorgesehen, daß an der Mischeinrichtung eine Antriebseinrichtung zur Erzeugung einer oszillierenden Rotationsbewegung der Kammer um ihre Mittenachse angeordnet ist, und daß in der Kammer wenigstens ein feststehendes, radial zur Mittenachse der Kammer ausgerichtetes Aufschäumelement angeordnet ist.

Dabei ist die Antriebseinrichtung mit der Mischeinrichtung derart ausgebildet, daß durch die Antriebseinrichtung die gesamte Mischeinrichtung einer oszillierenden Bewegung unterzogen ist. Der Vorteil der erfindungsgemäßen Vorrichtung liegt darin begründet, daß keine rotierenden Teile innerhalb der Mischeinrichtung angeordnet sind. Somit ist der Einsatz von Dichtelementen, welche stark durch die rotierenden Teile eines Rührwerkzeuges belastet werden, nicht notwendig, wodurch gleichzeitig mögliche auftretende Verunreinigungen durch Schmiermittel aus den Lagern eines rotierenden Rührwerkzeuges auszuschließen sind. Des weiteren ist durch die sehr einfach ausgestaltete Ausführungsform der Erfindung der notwendige Wartungsaufwand und die damit verbundenen Kosten sehr gering, da keine von außen eingeführten Teile in die Mischeinrichtung hineinragen. Der Aufschäumprozeß ist mit den in der Kammer feststehenden bzw. fest angeordneten Aufschäumelementen umgesetzt, wobei bevorzugt acht Aufschäumelemente in einer vorbestimmten Anordnung in der Kammer insbesondere radial zu deren Mittenachse angeordnet sind. Es können je nach Viskosität des eingesetzten Stoffes bzw. Stoffgemisches bis zu vierundzwanzig Aufschäumelemente in der Kammer der Mischeinrichtung eingesetzt werden.

Mit besonderem Vorteil ist nach einer Weiterbildung der Erfindung vorgesehen, daß die Antriebseinrichtung zur Erzeugung einer oszillierenden Rotationsbewegung ein Exzentergetriebe aufweist. Durch das eingesetzte Exzentergetriebe läßt sich sehr einfach die für den Herstellungsprozeß vorteilhafte oszillierende Rotationsbewegung aus einer Drehbewegung umwandeln, wobei die Drehbewegung bevorzugt durch einen Elektromotor erzeugt wird. Gleichzeitig wird die Welle des Exzentergetriebes, welche die oszillierende Rotationsbewegung auf die Mischeinrichtung überträgt, lediglich einer Torsionsbeanspruchung unterzogen, was sich vorteilhaft auf die Haltbarkeit und die Einsatzmöglichkeiten der erfindungsgemäßen Vorrichtung auswirkt.

Zur Umsetzung eines kontinuierlichen Aufschäumverfahrens, weist die Mischeinrichtung wenigstens eine geschlossene Kammer auf, welche die Funktion einer Mischkammer hat, wobei in der Kammer wenigstens ein Aufschäumelement angeordnet ist. Dazu wird der Stoff bzw. das Stoffgemisch mit einem Druck beaufschlagt, was den Vorteil hat, daß mit Hilfe des Überdrucks das kontinuierliche Einbringen des Stoffes, der kontinuierliche Weitertransport während des Aufschäumens und das kontinuierliche Abführen des aufgeschäumten Stoffes bzw. Stoffgemisches erfolgt.

Jedes Aufschäumelement ist dazu als Schaufel ausgebildet und weist Durchbrüche in vorbestimmter Anzahl, Form und Größe auf. Jede Schaufel ist derart in der Kammer angeordnet, daß kurz nach dem Einbringen des Stoffes durch die oszillierende Bewegung die Berührung der Schaufel mit dem Stoff erzwungen wird. Jede Schaufel weist insbesondere Durchbrüche, die speziell auf das aufzuschäumende Medium abgestimmt sind, in vorbestimmter Anzahl, Form und Größe auf. Dabei bringt die vorhandene Viskosität des aufzuschäumenden Stoffes einen wesentlich zu berücksichtigenden Einfluß für die Form und Größe der zu wählenden Durchbrüche und somit auch für die Anzahl der auf der Schaufel möglichen Durchbrüche. Die Schaufeln, welche bevorzugt eine blechartige Ausbildung aufweisen, sind insbesondere mit Durchbrüchen in Form von Dreiecken, Rechtecken oder kreisrunden Löchern versehen. Dabei können die unterschiedlichen Formen der Durchbrüche individuell auf das Aufschäumverhalten der unterschiedlichen Stoffe bzw. Stoffgemische abgestimmt werden. Es ist weiterhin möglich, jede andersartige Ausgestaltungen der Durchbrüche, insbesondere bezogen auf die Form, zum Aufschäumen zu verwenden. Um an den Schaufeln eine Korrosionsbeständigkeit zu erreichen und eine ausreichende Festigkeit während des Aufschäumens zu gewährleisten, wird insbesondere als Werkstoff ein hochlegierter Stahl eingesetzt.

Nach einer Weiterbildung der Erfindung ist vorgesehen, daß die Kammer der Mischeinrichtung zylinderförmig ausgebildet ist. Durch diese Ausführungsform ist vorteilhafterweise eine gleichmäßige Verteilung der auftretenden Fliehkraftbelastung an der Welle des Exzentergetriebes gewährleistet. Somit tritt neben der Torsionsbelastung der Welle keine weitere Beanspruchung durch ein Biegemoment auf, was sich vorteilhaft auf das Eigenschwingverhalten der Vorrichtung auswirkt.

Um eine optimale Anordnung der Aufschäumelemente in der Mischeinrichtung vornehmen zu können, weist die Mischeinrichtung nach einer ersten Alternative einen Radkörper auf, wobei der Radkörper aus mehreren Aufschäumelementen ausgebildet ist, welche radial zu einem gemeinsamen Mittenbereich ausgerichtet sind. Der Radkörper kann sich je nach vorbestimmter Viskosität des aufgeschäumten Endproduktes aus einer beliebigen Anzahl von Aufschäumelementen zusammensetzen. Dabei werden die Aufschäumelemente über zwei Ringelemente gehalten, welche eine Positionierung der verschiedenen Aufschäumelemente zueinander vornehmen. Die Ausgestaltung der Aufschäumelemente zu einem kompakten, als Gesamtheit in die Kammer einsetzbaren Radkörper hat den Vorteil, daß der Radkörper bereits im Voraus zusammengestellt bzw. bestückt werden kann und somit leicht austauschbar ist, was wiederum aufzuwendende Rüstzeiten verringert.

Zur Lagesicherung des Radkörpers weist die Mischeinrichtung wenigstens zwei Arretierelemente auf. Die Arretierelemente, welche bevorzugt als in die Mischkammer vorstehende Stifte ausgebildet sind, greifen jeweils in einen der Ringelemente des Radkörpers und verhindern das gegenläufige Verdrehen derselbigen und somit einen Defekt des Radkörpers während des kontinuierlich ablaufenden Verfahrens.

Des weiteren weist die Mischeinrichtung eine die kreisringförmige Kammer unterbrechende Trennwand auf. Die Trennwand, welche fest mit den die Kammer ausbildenden Flächen des Gehäuses verbunden ist, dient vorzugsweise zur Umsetzung einer vorbestimmten Fließrichtung bzw. eines Fließweges. Dadurch wird insbesondere zwischen dem Eintritt und dem Austritt in bzw. aus der Kammer der aufzuschäumende Stoff einem definierten Verfahrensablauf unterzogen, wodurch stets eine homogene Zusammensetzung des Endproduktes gegeben ist.

Nach einer zweiten Alternative der Erfindung ist vorgesehen, daß die Mischeinrichtung einen die Kammer ausbildenden Radkörper aufweist, wobei die Mantelflächen des Radkörpers, welche bevorzugt die Kammer ausbilden, eine gleiche Anzahl von Nuten aufweisen. Bei der Ausgestaltung der Mischeinrichtung hat die Verwendung eines Radkörpers den Vorteil, daß dieser, mit Hilfe eines drehenden Bearbeitungsverfahrens, ein konstruktiv einfach herzustellendes Bauteil ist. Gleichzeitig wird durch diese Ausführung die bevorzugt angestrebte gleichmäßige Fliehkraftbelastung der Welle erreicht. Um die für den Aufschäumprozeß benötigen Schaufeln am Radkörper der Mischeinrichtung aufnehmen zu können, ist beispielsweise an den die Kammer ausbildenden Mantelflächen des Radkörpers eine gleiche Anzahl von Nuten angeordnet. Bei geöffneter Kammer lassen sich, je nach aufzuschäumendem Stoff, bis zu vierundzwanzig Schaufeln in die Kammer einsetzen. Jede einzelne Schaufel läßt sich über die Nuten sehr einfach einsetzen bzw. herausnehmen, und über das Aufsetzen des Deckels auf dem Radkörper der Mischeinrichtung ist die Lagesicherung der Schaufeln gewährleistet.

Um das Einbringen und das Abführen des Stoffes bzw. des Stoffgemisches in oder aus der Mischeinrichtung heraus sicherzustellen, ist diese mit zumindest zwei Anschlüssen versehen. Die Verwendung von zwei Anschlüssen an der Mischeinrichtung hat den Vorteil, daß der durchzuführende Aufschäumvorgang kontinuierlich durchführbar ist und somit eine effiziente Auslastung der Vorrichtung gewährleistet.

Die Anschlüsse zum Einbringen und Abführen des aufzuschäumenden Stoffes sind bei der ersten Alternative nebeneinander in einer Außenwandung der Mischeinrichtung angeordnet, wobei sich jeweils ein Anschluß auf einer Seite bezüglich der Trennwand befindet. Durch diese Zuordnung der Anschlüsse zur Trennwand wird ein für den aufzuschäumenden Stoff vorbestimmter Fließweg vorgegeben. Dadurch soll erreicht werden, daß die Stoffe sämtliche auf dem gesamten Umfang der Kammer verteilte Aufschäumelemente während des Aufschäumprozesses durchfließen, wodurch eine optimale und gleichmäßige Zusammensetzung des Endproduktes gegeben ist.

Bei der zweiten Alternative ist vorgesehen, daß die Anschlüsse in einem Winkel von etwa 180° zueinander auf dem Außendurchmesser des Radkörpers angeordnet sind. Dadurch ist ebenfalls eine optimale Ausnutzung des gesamten zur Verfügung stehenden Querschnittes der Kammer während des Aufschäumvorganges durch den Stoff gegeben. Dabei sind die Anschlüsse bevorzugt oben und unten am Radkörper angeordnet, was vorteilhafterweise zu einer gleichmäßigen Verteilung des Stoffes im Querschnitt der Kammer führt. Bevorzugt wird der aufzuschäumende Stoff von unten in die Kammer eingebracht, damit sich eine definierte Fließgeschwindigkeit des aufzuschäumenden Stoffes über den Druck, welcher am Stoff anliegt, umsetzen läßt.

Um die vorgegebenen Qualitätsmerkmale des aufzuschäumenden Stoffes gewährleisten zu können, wird als Werkstoff für die Mischeinrichtung ein korrosionsbeständiger Werkstoff eingesetzt. Dieser garantiert speziell bei Stoffen, welche in der Lebensmitteltechnik aufgeschäumt werden, keine Beeinflussung der Qualitätseigenschaften und verhindert somit einen vorzeitigen Zersetzungsprozeß der Schäume. Bevorzugt werden zur Ausbildung der Mischeinrichtung hochlegierte Stähle verwendet, da diese neben der vorteilhaften Eigenschaft der Korrosionsbeständigkeit zusätzlich hohe Festigkeitswerte erreichen. Die hohen Festigkeiten werden besonders bei Prozeßgrößen, wie beispielsweise einem Druck von 10 bar, benötigt, da bei einem möglichen Kammervolumen von 5 Litern eine hohe Belastung speziell an den Stirnflächen der Mischeinrichtung entsteht. Es ist jedoch auch möglich, bei bestimmten Ausführungen der Mischeinrichtungen und bei niedrigen Verfahrensgrößen Kunststoffe zum Einsatz zu bringen. Diese zeigen hinsichtlich ihrer Verarbeitung spezielle Vorteile gegenüber den hochlegierten Stählen.

Ausführungsbeispiele der Erfindung, aus denen sich weitere erfinderische Merkmale ergeben, sind in der Zeichnung dargestellt. Es zeigen:

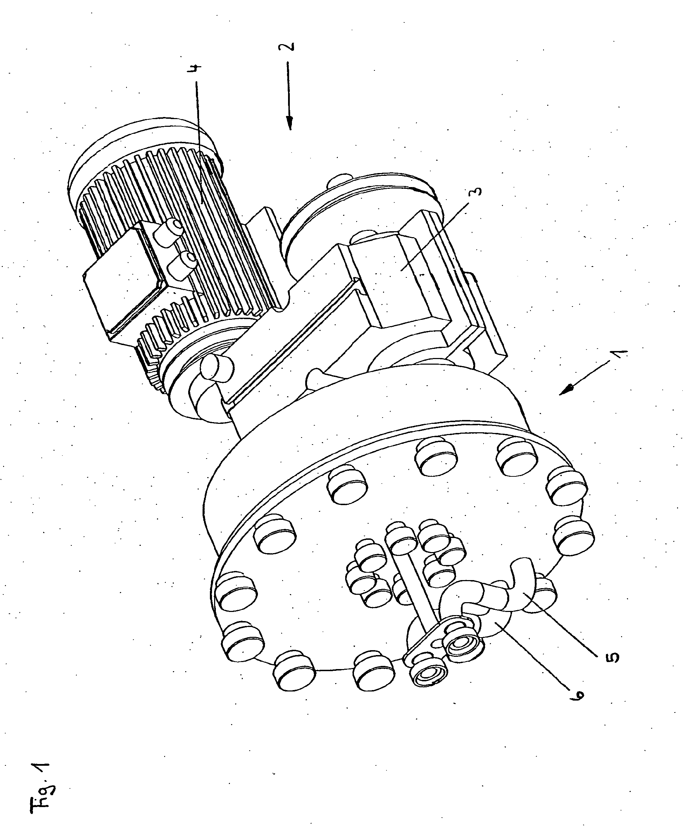

- Fig. 1:: eine perspektivische Ansicht eines ersten Ausführungsbeispiels einer erfindungsgemäßen Vorrichtung;
- Fig. 2:: eine Ansicht einer Mischeinrichtung der Vorrichtung nach Fig. 1 nach Art einer Explosionsdarstellung;
- Fig. 3:: eine perspektivische Ansicht eines zweiten Ausführungsbeispiels der erfindungsgemäßen Vorrichtung mit einer alternativ ausgebildeten Mischeinrichtung, und
- Fig. 4:: eine Ansicht der Mischeinrichtung nach Fig. 3 nach Art einer Explosionsdarstellung.

Mit 1 ist eine Mischeinrichtung einer Vorrichtung zum Aufschäumen wenigstens eines flüssigen oder viskosen Stoffes bezeichnet, wobei die Mischeinrichtung 1 direkt mit einer Antriebseinrichtung 2 verbunden ist. Die Antriebseinrichtung 2 setzt sich aus einem Exzentergetriebe 3 und einem Motor 4 zusammen und generiert eine oszillierende Rotationsbewegung der Mischeinrichtung 1. Während der kontinuierlich umgesetzten oszillierenden Rotationsbewegung wird über die Anschlüsse 5, 6, welche an der Mischeinrichtung 1 angeordnet sind, ein Stoff bzw. ein Stoffgemisch zum Vorgang des Aufschäumens in die Mischeinrichtung 1 eingebracht bzw. wieder abgeführt.

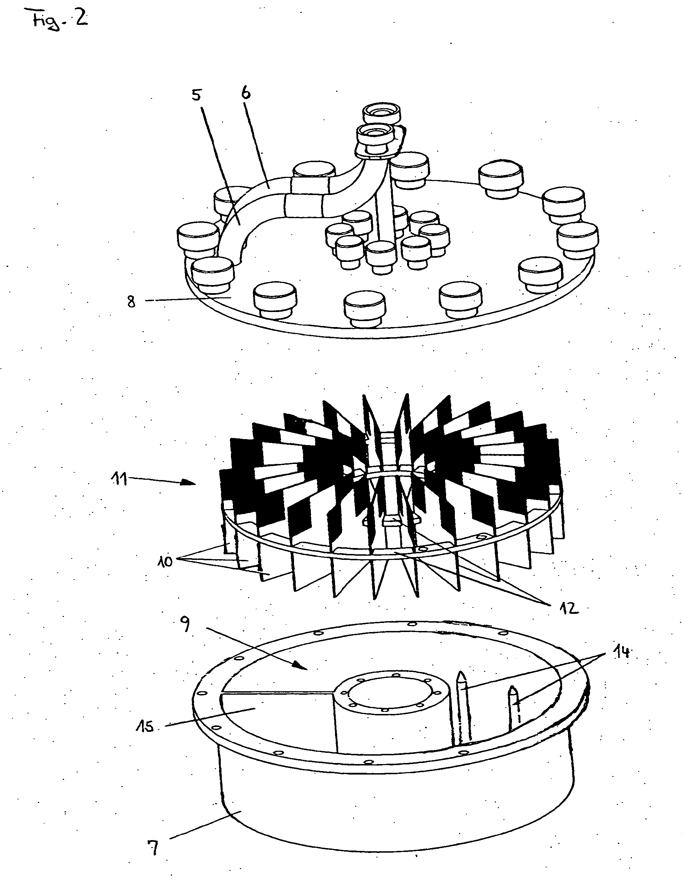

Die Mischeinrichtung 1, wie Figur 2 nach Art einer Explosionsdarstellung aufzeigt, unterteilt sich in ein Gehäuse 7 und einen Deckel 8, wobei das Gehäuse 7 mit dem aufgesetzten Deckel 8 eine kreisringförmige Kammer 9 ausbilden. In der Kammer 9 ist ein aus mehreren Aufschäumelementen 10, welche radial zu einem gemeinsamen Mittenbereich ausgerichtet sind, ausgebildeter Radkörper 11 angeordnet. Die Aufschäumelemente 10 sind insbesondere als Schaufel bzw. Paddel ausgebildet und werden mit Hilfe zweier Ringelemente 12, welche über Rasten in die Seitenbereiche eines jeweiligen Aufschäumelementes 10 eingreifen, in ihren vorbestimmten Positionen gehalten. Jedes Aufschäumelement 10 weist, bezogen auf die Viskosität des aufzuschäumenden Stoffes, eine vorbestimmte Anzahl, Form und Größe von Durchbrüchen auf. Um eine Lagesicherung des Radkörpers 11 in der Kammer 9 realisieren zu können, ist die Mischeinrichtung 1, speziell das Gehäuse 7, in vorbestimmten Bereichen mit mehreren Arretierelementen 14 versehen. Die Arretierelemente 14 greifen dazu jeweils in die Ringelemente 12 und gewährleisten somit die Lagesicherung des Radkörpers 11. Da die Anschlüsse 5, 6 zum Einbringen und Abführen des aufzuschäumenden Mediums in einem Winkel von etwa 15° zueinander auf dem Deckel 8 der Mischeinrichtung 1 angeordnet sind und der Aufschäumvorgang über den gesamten Umfang der Mischkammer 9 erfolgen soll, ist es notwendig, daß am Gehäuse 7 eine die kreisringförmige Mischkammer 9 unterbrechende Trennwand 15 vorhanden ist. Somit ist ein optimaler Aufschäumvorgang gewährleistet.

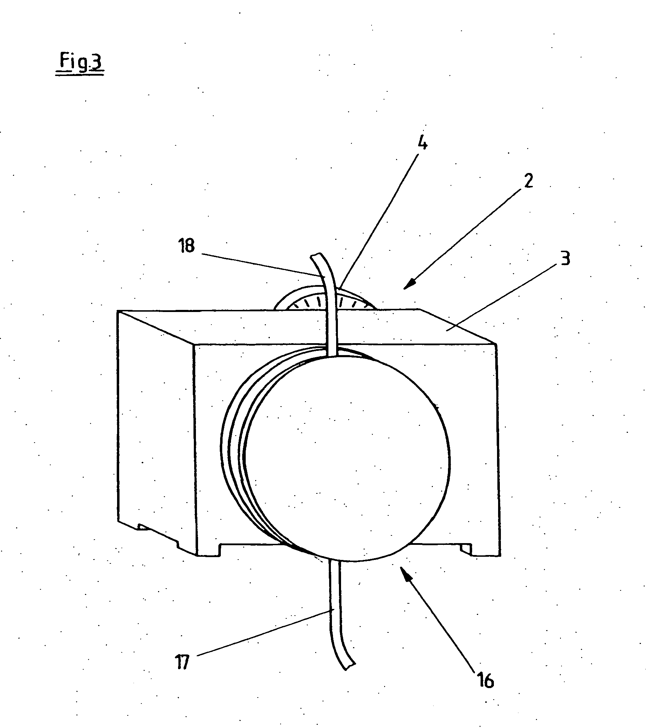

Die alternativ ausgestaltete Vorrichtung, wie in Figur 3 darstellt ist, unterteilt sich in eine Mischeinrichtung 16 und eine Antriebseinrichtung 2, wobei die Antriebseinrichtung 2 sich aus einem Exzentergetriebe 3 und einem Motor 4 zusammensetzt. Die Mischeinrichtung 1 ist insbesondere über eine nicht dargestellte Welle mit dem Exzentergetriebe 3 verbunden und führt während des Aufschäumens eines Stoffes bzw. eines Stoffgemisches eine oszillierende Rotationsbewegung aus. Um den Stoff bzw. das Stoffgemisch in die Mischeinrichtung 16 einzubringen oder wieder abzuführen, sind an dieser zwei Zuleitungen 17, 18 montiert.

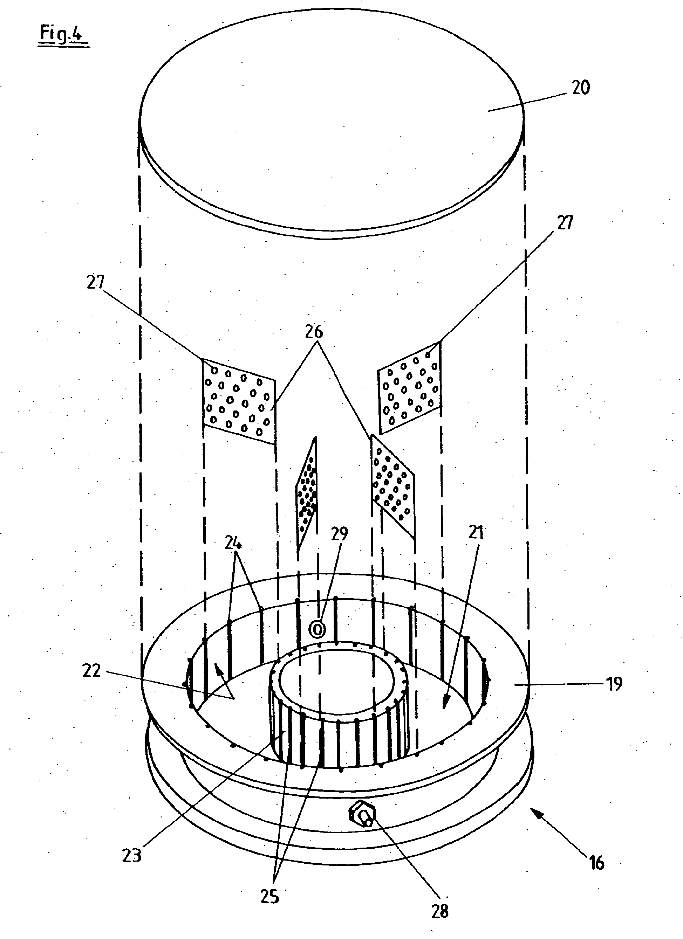

Figur 4 verdeutlicht insbesondere nach Art einer Explosionsdarstellung den Aufbau und die Funktionsweise der Mlscheinrichtung 16. Die Mischeinrichtung 16 setzt sich aus einem Radkörper 19 und einem Deckel 20 zusammen. Im Inneren der Mischeinrichtung 16 entsteht eine Mischkammer 21, wobei die an der Ausbildung der Mischkammer 21 beteiligten Mantelflächen 22, 23 des Radkörpers 19 mit Nuten 24, 25 versehen sind. Jede Mantelfläche 22, 23 ist mit bis zu vierundzwanzig Nuten 24, 25 versehen, wodurch eine beliebige Anzahl von Aufschäumelementen 26, die als Schaufeln bzw. Paddel ausgebildet sind, je nach vorliegender Viskosität des aufzuschäumenden Stoffes, in die Nuten 24, 25 eingeschoben werden können. Die Aufschäumelemente 26 sind, ebenfalls bezogen auf die Viskosität des aufzuschäumenden Stoffes, mit einer vorbestimmten Anzahl, Form und Größe von Durchbrüchen 27 versehen. Nachdem der aufzuschäumende Stoff über den Anschuß 28 in die Kammer 21 eingebracht ist, wird dieser durch die oszillierende Rotationsbewegung durch die Durchbrüche 27 der Aufschäumelemente 26 gedrückt. Es werden dadurch Scherkräfte an der Flüssigkeit verursacht, so daß durch das in die Flüssigkeit eingebrachte Gas mit einem Flüssigkeitsfilm umgebene Gasblasen entstehen. Nach dem Aufschäumvorgang wird der Schaum über den Anschluß 29, welcher dem Anschluß 28 auf einem Winkel in etwa von 180° gegenüberliegt, aus der Kammer 21 abgeführt.

## Patentansprüche

1. Verfahren zum Aufschäumen wenigstens eines flüssigen oder viskosen Stoffes, bei dem der Stoff in zumindest eine geschlossene Kammer eingebracht wird, während die Kammer in eine oszillierende Bewegung versetzt wird,
**dadurch gekennzeichnet,**
**daß** die Kammer (9, 21) während des Einbringens des Stoffes um ihre Mittenachse in eine oszillierende Rotationsbewegung versetzt wird, und
**daß** über die oszillierende Rotationsbewegung mehrere in der Kammer (9, 21) feststehende, radial zur Mittenachse der Kammer ausgerichtete Aufschäumelemente (10, 26) durch den aufzuschäumenden Stoff bewegt werden.

2. Verfahren nach Anspruch 1, **dadurch gekennzeichnet, daß** mittels der Aufschäumelemente (10, 26) insbesondere ein Gas in den flüssigen Stoff eingebracht wird.

3. Verfahren nach Anspruch 1 oder 2, **dadurch gekennzeichnet, daß** der zu schäumende Stoff mit einem Überdruck zwischen 1 bar bis 10 bar in die Kammer (9, 21) gedrückt wird.

4. Verfahren nach einem der Ansprüche 1 bis 3, **dadurch gekennzeichnet, daß** die oszillierende Bewegung der Kammer (9, 21) mit einer Frequenz von 10 Hz bis 25 Hz durchgeführt wird.

5. Vorrichtung zum Aufschäumen wenigstens eines flüssigen oder viskosen Stoffes, mit einer Mischeinrichtung, welche wenigstens eine geschlossene Kammer für den aufzuschäumenden Stoff aufweist, zum Durchführen des Verfahrens nach einem der Ansprüche 1 bis 5,
**dadurch gekennzeichnet,**
**daß** an der Mischeinrichtung (1, 16) eine Antriebseinrichtung (2) zur Erzeugung einer oszillierenden Rotationsbewegung der Kammer (9, 21) um ihre Mittenachse angeordnet ist, und daß in der Kammer (9, 21) wenigstens ein feststehendes, radial zur Mittenachse der Kammer ausgerichtetes Aufschäumelement (10, 26) angeordnet ist.

6. Vorrichtung nach Anspruch 5, **dadurch gekennzeichnet, daß** die Antriebseinrichtung (2) zur Erzeugung einer oszillierenden Rotationsbewegung ein Exzentergetriebe (3) aufweist.

7. Vorrichtung nach einem der Ansprüche 5 und 6, **dadurch gekennzeichnet, daß** jedes Aufschäumelement (10, 26) eine Schaufel ist, und daß jede Schaufel Durchbrüche (27) in vorbestimmter Anzahl, Form und Größe aufweist.

8. Vorrichtung nach Anspruch 5 bis 7, **dadurch gekennzeichnet, daß** die Kammer (9, 21) der Mischeinrichtung (1, 16) zylinderförmig ausgebildet ist.

9. Vorrichtung nach einem der Ansprüche 5 bis 8, **dadurch gekennzeichnet, daß** die Mischeinrichtung (1) einen Radkörper (11) aufweist, und daß der Radkörper (11) aus mehreren Aufschäumelementen (10) ausgebildet ist, welche radial zu einem gemeinsamen Mittenbereich ausgerichtet sind.

10. Vorrichtung nach einem der Ansprüche 5 bis 9, **dadurch gekennzeichnet, daß** die Mischeinrichtung (1) wenigstens zwei Arretierelemente (14) zur Lagesicherung des Radkörpers (11) aufweist.

11. Vorrichtung nach einem der Ansprüche 5 bis 10, **dadurch gekennzeichnet, daß** die Mischeinrichtung (1) eine die kreisringförmige Kammer (9) unterbrechende Trennwand (15) aufweist.

12. Vorrichtung nach einem der Ansprüche 5 bis 8, **dadurch gekennzeichnet, daß** die Mischeinrichtung (1) einen Radkörper (19) aufweist und daß die Mantelflächen (22, 23) des Radkörpers (19), welche die Kammer (21) ausbilden, eine gleiche Anzahl von Nuten (24, 25) aufweisen.

13. Vorrichtung nach einem der Ansprüche 11 oder 12, **dadurch gekennzeichnet, daß** die Mischeinrichtung (1, 16) mit zumindest zwei Anschlüssen (5, 6, 28, 29) versehen ist.

14. Vorrichtung nach Anspruch 11 und 13, **dadurch gekennzeichnet, daß** die Anschlüsse (5, 6) nebeneinander in einer Außenwandung der Mischeinrichtung (1) angeordnet sind, wobei sich jeweils ein Anschluß (5, 6) auf einer Seite bezüglich der Trennwand (15) befindet.

15. Vorrichtung nach Anspruch 13, **dadurch gekennzeichnet, daß** die Anschlüsse (28, 29) in einem Winkel von etwa 180 ° zueinander auf dem Außendurchmesser des Radkörpers (19) angeordnet sind.

16. Vorrichtung nach einem der Ansprüche 5 bis 15, **dadurch gekennzeichnet, daß** der Werkstoff für die Mischeinrichtung (1, 16) ein korrosionsbeständiger Werkstoff ist.

## Claims

1. A method for expanding at least one fluid or viscous substance
**characterised in that**
the substance is introduced into at least one closed chamber (9, 21), and that the chamber (9, 21) is made to oscillate while the substance is being introduced.

2. The method as recited in claim 1, **characterised in that** the chamber (9, 21) is made to oscillate in a rotary motion.

3. The method as recited in either of claims 1 or 2, **characterised in that** the oscillating motion causes foaming elements to pass through the substance to be expanded, which in turn particularly introduces a gas into the fluid substance.

4. The method as recited in any of claims 1 to 3, **characterised in that** the substance to be expanded is compressed in the chamber (9, 21) with an overpressure between 1 bar to 10 bar.

5. The method as recited in any of claims 1 to 4, **characterised in that** the chamber (9, 21) is made to oscillate at a frequency of 10 Hz to 25 Hz.

6. A device for expanding at least one fluid or viscous substance, including a mixing apparatus, preferably for performing the method as recited in any of claims 1 to 5,
**characterised in that**
a drive device (2) is disposed on the mixing apparatus (1, 16) in order to create an oscillating motion.

7. The device as recited in claim 6, **characterised in that** the drive device (2) has an eccentric gear train (3) for creating an oscillating motion.

8. The device as recited in either of claims 6 or 7, **characterised in that** the mixing apparatus (1, 16) contains at least one closed chamber (9, 21), and that at least one foaming element (10, 26) is arranged inside the chamber (9, 21).

9. The device as recited in claim 8, **characterised in that** each foaming element (10, 26) is a paddle, and that each paddle has a predefined number of perforations (27) having predefined size and shape.

10. The device as recited in either of claims 8 or 9, **characterised in that** the chamber (9, 21) of the mixing apparatus (1, 16) is constructed cylindrically.

11. The device as recited in any of claims 6 to 10, **characterised in that** the mixing apparatus (1) has a wheel body (11), and that the wheel body (11) is constructed from a plurality of foaming elements (10) that are aligned radially with respect to a common central area.

12. The device as recited in any of claims 6 to 11, **characterised in that** the mixing apparatus (1) has at least two arresting elements (14) to ensure that the wheel body (11) is retained in position.

13. The device as recited in any of claims 6 to 12, **characterised in that** the mixing apparatus (1) has a dividing wall (15) that divides the annular chamber (9).

14. The device as recited in any of claims 6 to 10, **characterised in that** the mixing apparatus (1) has a wheel body (19), and that the circumferential surfaces (22, 23) of the wheel body (19) that form the chamber (21) are furnished with the same number of grooves (24, 25).

15. The device as recited in either of claims 13 or 14, **characterised in that** the mixing apparatus (1, 16) is furnished with at least two connections (5, 6, 28, 29).

16. The device as recited in claims 13 and 15, **characterised in that** the connections (5, 6) are arranged adjacent one another in an outer wall of the mixing apparatus (1), one connection (5, 6) being located on either side of the dividing wall (15).

17. The device as recited in claims 14 and 15, **characterised in that** the connections (28, 29) are arranged at an angle of about 180° relative to one another on the outer diameter of the wheel body (19).

18. The device as recited in any of claims 11 to 17, **characterised in that** the substance from which the mixing apparatus (1, 16) is constructed is corrosion resistant.

## Revendications

1. Procédé pour faire mousser une matière au moins liquide ou visqueuse,
**caractérisé en ce que**
la matière est renfermée dans au moins une chambre fermée (9, 21) et **en ce que** la chambre (9, 21) est pendant le remplissage déplacée dans un mouvement oscillant.

2. Procédé selon la revendication 1, **caractérisé en ce que** la chambre (9, 21) est déplacée dans un mouvement de rotation oscillant.

3. Procédé selon la revendication 1 ou 2, **caractérisé en ce que** au moyen du mouvement oscillant, des éléments de moussage sont mis en mouvement au travers de la matière à faire mousser et **en ce que** notamment un gaz est introduit dans la matière liquide.

4. Procédé selon une des revendications 1 à 3, **caractérisé en ce que** la matière à faire mousser est pressée avec une surpression comprise entre 1 et 10 bar dans la chambre (9, 21).

5. Procédé selon une des revendications 1 à 4, **caractérisé en ce que** le mouvement oscillant de la chambre (9, 21) est effectué à une fréquence comprise entre 10 Hz et 25 Hz.

6. Dispositif pour faire mousser une matière au moins liquide ou visqueuse, comportant un dispositif de mélange, de préférence pour mettre en oeuvre le procédé selon une des revendications 1 à 5,
**caractérisé en ce que**
sur le dispositif de mélange (1, 16), un dispositif d'entraînement (2) pour générer un mouvement oscillant est disposé.

7. Dispositif selon la revendication 6, **caractérisé en ce que** le dispositif d'entraînement (2) pour générer un mouvement de rotation oscillant présente une transmission à excentrique (3).

8. Dispositif selon la revendication 6 ou 7, **caractérisé en ce que** le dispositif de mélange (1, 16) présente au moins une chambre fermée (9, 21), et **en ce que** au moins un élément de moussage (10, 26) est disposé dans la chambre (9, 21).

9. Dispositif selon la revendication 8, **caractérisé en ce que** chaque élément de moussage (10, 26) est une ailette, et **en ce que** chaque ailette présente des percées (27) en un nombre, une forme et une taille prédéterminés.

10. Dispositif selon la revendication 8 ou 9, **caractérisé en ce que** la chambre (9, 21) du dispositif de mélange (1, 16) est configurée en forme de cylindre.

11. Dispositif selon une des revendications 6 à 10, **caractérisé en ce que** le dispositif de mélange (1) présente un corps de roue (11), et **en ce que** le corps de roue (11) est constitué de plusieurs éléments de moussage (10), lesquels sont orientés radialement par rapport à une région centrale commune.

12. Dispositif selon une des revendications 6 à 11, **caractérisé en ce que** le dispositif de mélange (1) présente au moins deux éléments de butée (14) pour le positionnement du corps de roue (11).

13. Dispositif selon une des revendications 6 à 12, **caractérisé en ce que** le dispositif de mélange (1) présente une paroi de séparation (15) interrompant la chambre circulaire (9).

14. Dispositif selon une des revendications 6 à 10, **caractérisé en ce que** le dispositif de mélange (1) présente un corps de roue (19) et **en ce que** les surfaces de gaine (22, 23) du corps de roue (19), qui définissent la chambre (21), présentent un même nombre de rainures (24, 25).

15. Dispositif selon une des revendications 13 ou 14, **caractérisé en ce que** le dispositif de mélange (1, 16) est pourvu de au moins deux raccords (5, 6, 28, 29).

16. Dispositif selon la revendication 13 et 15, **caractérisé en ce que** les raccords (5, 6) sont disposés l'un à côté de l'autre dans une paroi extérieure du dispositif de mélange (1), moyennant quoi chacun des raccords (5, 6) se trouve respectivement sur un côté par rapport à la paroi de séparation (15).

17. Dispositif selon la revendication 14 ou 15, **caractérisé en ce que** les raccords (28, 29) sont disposés à un angle de 180° l'un par rapport à l'autre sur le diamètre extérieur du corps de roue (19).

18. Dispositif selon une des revendications 11 à 17, **caractérisé en ce que** le matériau du dispositif de mélange (1, 16) est un matériau résistant à la corrosion.
